# EUROPÄISCHE PATENTSCHRIFT

(11) **EP 2 208 634 B1**
(45) Veröffentlichungstag und Bekanntmachung des Hinweises auf die Patenterteilung: **08.02.2012**
(21) Anmeldenummer: 09016030.0
(22) Anmeldetag: 24.12.2009
(51) Int. Cl.: B60N 2/24, B60N 2/42, B60N 2/427, F41H 7/02

(54) **Sitzeinrichtung**
Seat device
Installation de siège

(30) Priorität: 16.01.2009 DE 102009004923
(43) Veröffentlichungstag der Anmeldung: 21.07.2010
(73) Patentinhaber: Rheinmetall Landsysteme GmbH, 24107 Kiel (DE)
(72) Erfinder: Jagelki, Gebhard, 33106 Paderborn (DE); Kröger, Hartwig, 24161 Altenholz (DE)
(74) Vertreter: Dietrich, Barbara

(56) Entgegenhaltungen:
- EP-A1- 0 078 479
- EP-A1- 1 916 148
- WO-A1-2005/031245
- WO-A2-03/004958
- DE-A1- 3 734 707
- DE-U1- 20 217 072
- DE-U1-202004 012 857
- US-A- 3 181 821

## Beschreibung

Die Erfindung betrifft eine Sitzeinrichtung, insbesondere für ein militärisches Fahrzeug, mit einem Fahrzeugsitz, der an einer horizontal angeordneten und in vertikaler Richtung verschiebbaren Sitzträgerkonsole befestigt ist, mit einem Schock absorbierenden Gestell.

Eine Sitzeinrichtung mit einer derartigen Konsole ist beispielsweise aus der deutschen Patentschrift DE 3734707 C2 bekannt. Dabei ist die Sitzträgerkonsole zur Höhenverstellung des Fahrzeugsitzes an einem Schlitten befestigt, welcher entlang zweier paralleler vertikaler Führungsschienen verschiebbar und in der jeweils gewählten Höhe mittels eines Rastbolzens an einer ebenfalls parallel zu den Führungsschienen verlaufenden Rastschiene befestigbar ist.

Bei dieser bekannten Sitzeinrichtung wirken die beispielsweise bei einer Minenexplosion auftretenden großen vertikalen Beschleunigungskräfte praktisch ungedämpft auf den jeweiligen Fahrzeuginsassen, da nach Fixierung der Höhenverstellung des Fahrzeugsitzes dieser über die Sitzträgerkonsole und die Rastschiene in der Regel starr mit dem Fahrzeug verbunden ist.

Aus der WO 03/004958 A2 ist ein geschütztes Personenfahrzeugbekannt, bei welchem zwischen einem auf dem Boden aufruhenden Fuß oder Stuhlbein und dem am Sitz befestigten Teil mindestens eine Sollbruchstelle oder dergleichen vorgesehen ist.

Einen schocksicheren Sitz offenbart des Weiteren die DE 202 17 072 U1. Bei einer Duckwelle bzw. Detonation wird die Verbindung zwischen einem Sitz und der Decke gelöst. Der Sitz ist zudem zwischen von der Decke zum Boden gespannten Seilen geführt. Eine Dämpfungseinrichtung zwischen einem am Boden befestigten Teil und einer Sollbruchstelle sieht die DE 20 2004 012 857 U1 vor.

Schock und Energie absorbierende Sitze verwendet das modulare Schutzsystem in der WO 2005/031245 A1.

Die EP 1 916 148 A betrifft einen Sitz für gepanzerte Fahrzeuge zum Schutz gegen Landminen. Dieser Sitz besteht aus einem Rahmen, einem Sitzrahmen, einer Sitzbespannung mit einer Sitzfläche, einer Rückenlehne und zwei seitlichen, in den Sitzbezug integrierten elastischen Traggurten sowie einem Rückhaltesystem. Der Sitzrahmen ist mit einer am Fahrzeugdach befestigten Aufhängung verbunden.

Die Erfindung basiert auf der Erkenntnis, dass beim Überfahren einer Mine oder dergleichen durch ein Fahrzeug (Anhänger, Container, etc.) die (Fahrzeug)-Konstruktion selbst derart stabil ist, dass das Fahrzeug oder dergleichen sich sehr schnell nach oben weg bewegt. Die Trägheitsmasse der Personen im Fahrzeug hingegen bewirkt, dass diese Person insgesamt gestaucht wird. Hier liegt der Ansatz der Erfindung, nämlich eine Konstruktion einzubinden, durch die mehr Zeit geschaffen wird und wodurch es der Person ermöglicht wird, trotz Trägheit der Stauchung besser auszuweichen.

In einer bevorzugten Ausführung realisiert die Konstruktion einen längeren Weg bzw. Abstand zwischen Sitzhöhe und Fahrzeugdach. Das heißt, wird das Fahrzeug nach oben geschleudert, erfolgt eine dieser Bewegung entgegen wirkende Maßnahme derart, dass der Sitz nach unten verfahren wird.

Eine Sitzanordnung dieser Art und nach Oberbegriff des Anspruchs 1 offenbart die EP 0 078 479 A. Dabei besteht die Sitzanlage aus zwei Anordnungen, wobei eine der beiden Anordnungen die Sitzschale einschließt und die andere zur Befestigung an der Seite im Transportmittel dient. Eine der Anordnungen weist einen Rahmen auf, der für jede Stützsäule einen oberen Kragen umfasst und die Säule gleitfähig umgibt. Eine Gleitbewegung ist aber nur dann möglich, wenn ein vorbestimmter Wert überschritten wird. Dann gleitet der Rahmen entlang der Säulen nach unten, wodurch sich die oberen Kragen von den Kappen entfernen und die verformbaren Bauteile relativ zu Verformungsbauteilen gezogen werden.

Der Erfindung liegt die Aufgabe zugrunde, eine Sitzeinrichtung zu offenbaren, welche beim Auftreten großer Beschleunigungskräfte, wie sie beispielsweise bei Minenexplosionen auftreten, diese mindestens teilweise absorbiert, um so die auf dem Sitz befindliche Person zu schützen.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Der Sitz ist in der bevorzugten Variante am Dach des Fahrzeugs etc. befestigt und besteht aus einem Konsolenträger, der beispielsweise mindestens zwei, teleskopartig ineinander verschiebbare Profilteile und ein Verbindungsteil ausweisen kann. Das untere (ein inneres) Profilteil ist dabei mit der Sitzträgerkonsole verbunden, das obere (ein äußeres) Profiteil mit der Decke.

Um auf einfache Weise eine Höhenverstellung des Fahrzeugsitzes durchführen zu können, kann es sich bei dem Verbindungsteil um eine vertikal beabstandete Rastnuten aufweisende Rastschiene handeln, wobei ein mit dem zweiten Profilteil verbundenes Rastelement in eine durch die Höhe der Sitzträgerkonsole vorgegebene Rastnut des Verbindungsteiles eingreift. Dadurch kann über den Rasthebel oder dergleichen die gewünschte Sitzhöhe einer Person angepasst und in dieser Höhe arretiert werden. Die Profilteile sind vorzugsweise rohrförmige Profilteile.

Alternative Anbindungen an das Fahrzeugdach sind dem Fachmann bekannt.

Ausgehend von einem derartig an der Decke des entsprechenden Fahrzeugs befestigbaren Sitz wird in die Konstruktion des Sitzes selbst eine Art Energie verzehrendes Elemente integriert, das im Falle einer Ansprengung etc. den Abstand bzw. die Sitzhöhe des Sitzes zur Decke verändert, das Kraftniveau begrenzt. Im Falle einer Überbelastung durch Überfahren einer Mine etc., wird das, die Energie verzehrende Element von einer Ruheposition in eine andere Position ausgefahren, sodass sich die Sitzhöhe zum Fahrzeugdach verändert, der Abstand länger wird. Dieser Weg reicht aus, die durch die Trägheit bedingte Gefahr des Stauchens des Körpers zu reduzieren bzw. zu minimieren, dem Körper mehr Zeit für eine Reaktion bereitzustellen.

Bei dem Energie verzehrenden Element handelt es sich im Wesentlichen um ein Reibelement mit wenigstens zwei teleskopartig verschiebbaren Profilteilen, wobei ein inneres Profilteil aus einem äußeren Profilteil verschoben wird und eine so genannte ausgefahrene Stellung einnimmt. Das Reibelement ist mit seiner unteren Seite an der Sitzträgerkonsole und mit der gegenüberliegenden oberen Seite entweder direkt oder über ein sich in axialer Richtung des Konsolenträgers erstreckendes Verbindungsteil an dem zweiten Profilteil des Konsolträgers abgestützt.

Das Reibelement besitzt am inneren Profilteil an seiner Oberfläche umfangsseitig in einem vorgebbaren Bereich Wölbungen, die beim Herauslaufen des inneren Profilteils das (jeweils) äußere Profilteil aufweiten (wenn mehrere Profilteile verwendet werden). Dadurch wird es möglich, eine klare, begrenzbare Kraft einzustellen. Das ist mit der Sitzanlage der EP 0 078 479 A nicht realisierbar.

Durch die Verwendung eines Energie verzehrenden Elements kann auf einfache Weise eine Anpassung der erfindungsgemäßen Sitzeinrichtung an unterschiedliche Anforderungen, beispielsweise bei der Verwendung der Sitzeinrichtung in unterschiedlichen Fahrzeugklassen, durchgeführt werden.

Weitere Einzelheiten und Vorteile der Erfindung ergeben sich aus dem folgenden, anhand einer Figur erläuterten Ausführungsbeispiel.

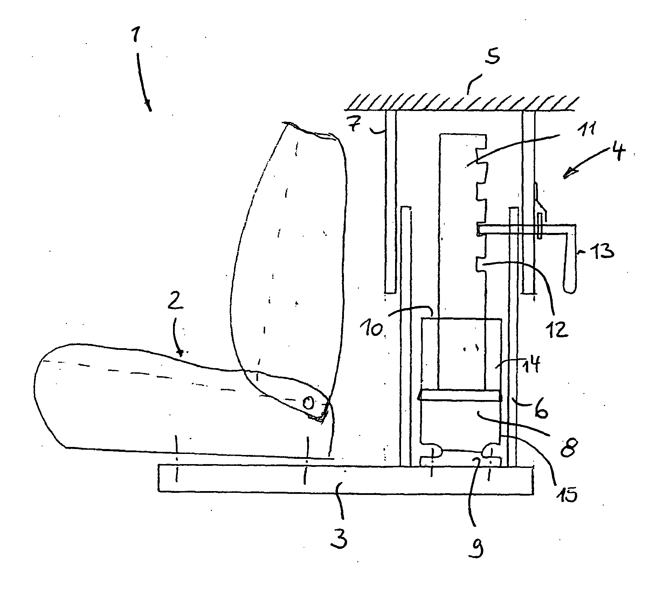

In der Figur ist mit 1 eine erfindungsgemäße Sitzeinrichtung bezeichnet, wie sie beispielsweise in einem gepanzerten Militärfahrzeug verwendet werden kann.

Die Sitzeinrichtung 1 umfasst einen Fahrzeugsitz 2, der auf einer horizontal angeordneten Sitzträgerkonsole 3 befestigt ist. Die Sitzträgerkonsole 3 ist ihrerseits an einem vertikalen Konsolenträger 4 angeordnet, der oberseitig fest mit der Fahrzeugdecke 5 eines nicht näher dargestellten Fahrzeuges oder dergleichen verbunden ist.

Der hier verwendete Konsolenträger 4 umfasst vorzugsweise zwei, teleskopartig ineinander schiebbare, rohrförmige Profilteile 6, 7, wobei das erste Profilteil 6 mit der Sitzträgerkonsole 3 und das zweite Profilteil 7 mit der Fahrzeugdecke 5 verbunden ist. Alternative Konstruktionen für die hängende Anbringung des Sitzes sind, wie bereits erwähnt, möglich.

Im Inneren des Konsolenträgers 4 befindet sich ein in axialer Richtung des Konsolenträgers 4 erstreckendes Verbindungsteil 11. Dabei handelt es sich bei dem Verbindungsteil 11 beispielsweise um eine vertikal beabstandete, Rastnuten 12 aufweisende Rastschiene, wobei ein mit dem zweiten Profilteil 7 verbundenes Rastelement (Rastbolzen) 13 in eine durch die Höhe der Sitzträgerkonsole 3 (und damit auch des Fahrzeugsitzes) vorgegebene Rastnut 12 des Verbindungsteiles 11 eingreift.

Gleichfalls im Inneren des Konsolenträgers 4 ist ein Energie verzehrendes Element 8 eingebunden, das mit der ersten Seite 9 an der Sitzträgerkonsole 3 und mit der gegenüberliegenden zweiten Seite 10 beispielsweise am Verbindungsteil 11 wirksicher verbunden ist.

Das Energie verzehrende Element 8 besteht aus wenigstens zwei, teleskopartig ineinander schiebbaren rohrförmigen Profilteilen 14, 15. Das innere Profilteil 14 weist diverse Wölbungen auf (nicht näher dargestellt), die an die Innenwand des äußeren Profilteils 15 angreifen.

Wirkt nun durch eine eventuelle Minenexplosion eine schockartige Beschleunigungskraft auf die Sitzträgerkonsole 3, so wird diese entgegen der Beschleunigungskraft im Fahrzeug wirkend nach unten ausgeschoben. Das erfolgt dadurch, dass die auf das Profilteil 14 einwirkende Kraft das Profilteil 14 mit den Wölbungen durch das äußere Profilteil 15 hindurch schiebt, wobei das äußere Rohr gleichzeitig leicht aufgeweitet wird. Dadurch wird es ermöglicht, eine klare, begrenzbare Kraft einzustellen.

Die Erfindung ist selbstverständlich nicht auf das vorstehend beschriebene Ausführungsbeispiel beschränkt. So können beispielsweise der Fahrzeugsitz und die Sitzträgerkonsole derart ausgebildet sein, dass der Fahrzeugsitz auch horizontal entlang der Sitzträgerkonsole verschiebbar und in der verschobenen Stellung an der Sitzträgerkonsole fixierbar ist.

Außerdem kann die Höheneinstellung des Fahrzeugsitzes und damit Sitzträgerkonsole durch einen zusätzlich vorgesehenen Antrieb erfolgen.

Es versteht sich, dass das Energie verzehrende Element 8 auch in eine Sitzkonstruktion einbindbar ist, die am Fahrzeugboden befestigt ist. In diesem Fall wären die Profile 6, 7 des Konsolenträgers 4 nicht am Fahrzeugdach sondern in der Fahrzeugwanne (nicht näher dargestellt, da dem Fachmann bekannt) befestigt.

### Bezugszeichenliste

- 1: Sitzeinrichtung
- 2: Fahrzeugsitz
- 3: Sitzträgerkonsole
- 4: Konsolenträger
- 5: Fahrzeugdecke
- 6: (erste) Profilteil
- 7: (zweite) Profilteil
- 8: Druckfeder, Energie verzehrendes Element
- 9: erste Seite
- 10: zweite Seite
- 11: Verbindungsteil, Rastschiene
- 12: Rastnut
- 13: Rastelement
- 14: inneres Profilteil
- 15: äußeres Profilteil

## Patentansprüche

1. Sitzeinrichtung (1), insbesondere für ein militärisches Fahrzeug, mit einem Fahrzeugsitz (2), der an einer Sitzträgerkonsole (3) befestigt ist, wobei in den, die Sitzträgerkonsole (3) haltenden Konsolenträger (4) ein Energie verzehrendes Element (8) derart eingebunden ist, dass im Falle einer Überbelastung durch Überfahren einer Mine oder einer Ansprengung, das die Energie verzehrende Element (8) von einer Ruheposition in eine andere Position ausgefahren wird, sodass sich die Sitzhöhe zum Fahrzeugdach bzw. Fahrzeugdecke (5) verändert, wobei der Abstand zu Fahrzeugdach bzw.-decke verlängert wird, **dadurch gekennzeichnet, dass** das Energie verzehrende Element (8) aus wenigstens zwei, ersten, teleskopartig ineinander schiebbaren rohrförmigen Profilteilen (14, 15) besteht und das innere Profilteil (14) diverse Wölbungen aufweist, die an die Innenwand des äußeren Profilteils (15) angreifen, sodass es möglich wird, durch Schieben des inneren Profilteiles (14) durch das äußere Profilteil (15) eine klare, begrenzbare Kraft einzustellen.

2. Sitzeinrichtung nach Anspruch 1, **dadurch gekennzeichnet, dass** der Konsolenträger (4) an der Fahrzeugdecke (5) des entsprechenden Fahrzeuges befestigbar ist.

3. Sitzeinrichtung nach Anspruch 1, **dadurch** gegenzeichnet, dass der Konsolenträger (4) an der Fahrzeugwanne des entsprechenden Fahrzeuges befestigbar ist.

4. Sitzeinrichtung nach Anspruch 2 oder 3, **dadurch gekennzeichnet, dass** der Konsolenträger (4) mindestens zwei, zweite teleskopartig ineinander schiebbare Profilteile (6, 7) aufweist, wobei das erste Profilteil (6) mit der Sitzträgerkonsole (3) verbunden ist und bei stoßartig auf die Sitzträgerkonsole (3) wirkenden Kräften gegen die Rückstellkraft des Energie verzehrenden Elementes (8) von einer Ruheposition in eine eingeschobene Position in das mit der Fahrzeugdecke (5) verbindbare zweite Profilteil (7) mindestens teilweise einschiebbar ist.

5. Sitzeinrichtung nach Anspruch 4, **dadurch gekennzeichnet, dass** es sich bei dem ersten und dem zweiten Profilteil (6, 7) um rohrförmige Profilteile handelt.

6. Sitzeinrichtung nach einem der Ansprüche 1 bis 5, **dadurch gekennzeichnet, dass** der Fahrzeugsitz (2) horizontal angeordnet und in vertikaler Richtung verschiebbar ist, sodass der Fahrzeugsitz (2) horizontal entlang der Sitzträgerkonsole (3) verschiebbar und in der verschobenen Stellung an der Sitzträgerkonsole (3) fixierbar ist.

7. Sitzeinrichtung nach einem der Ansprüche 1 bis 6, **dadurch gekennzeichnet, dass** im Inneren des Konsolenträgers (4) sich ein in axialer Richtung des Konsolenträgers (4) erstreckendes Verbindungsteil (11) befindet, das eine vertikal beabstandete, Rastnuten (12) aufweisende Rastschiene umfasst.

## Claims

1. Seat device (1), in particular for a military vehicle, with a vehicle seat (2) which is fastened to a seat carrier console (3), wherein an energy-consuming element (8) is linked into the console carrier (4), which holds the seat carrier console (3), in such a manner that, in the event of overloading by a mine or an explosive being driven over, the energy-consuming element (8) is extended from an inoperative position into a different position such that the seat height from the vehicle roof or vehicle ceiling (5) is changed, wherein the distance from the vehicle roof or vehicle ceiling is extended, **characterized in that** the energy-consuming element (8) consists of at least two first tubular profile parts (14, 15) which can be pushed telescopically one inside the other, and the inner profile part (14) has diverse curvatures which act on the inner wall of the outer profile part (15) such that it is possible, by pushing the inner profile part (14) through the outer profile part (15), to set a clear limitable force.

2. Seat device according to Claim 1, **characterized in that** the console carrier (4) is fastenable to the vehicle ceiling (5) of the corresponding vehicle.

3. Seat device according to Claim 1, **characterized in that** the console carrier (4) is fastenable to the vehicle hull of the corresponding vehicle.

4. Seat device according to Claim 2 or 3, **characterized in that** the console carrier (4) has at least two second profile parts (6, 7) which can be pushed telescopically one inside the other, the first profile part (6) being connected to the seat carrier console (3) and, in the event of forces acting in a shocklike manner on the seat carrier console (3), being able to be at least partially pushed counter to the restoring force of the energy-consuming element (8) from an inoperative position into a pushed-in position in the second profile part (7), which is connectable to the vehicle ceiling (5).

5. Seat device according to Claim 4, **characterized in that** the first and the second profile parts (6, 7) are tubular profile parts.

6. Seat device according to one of Claims 1 to 5, **characterized in that** the vehicle seat (2) is arranged horizontally and is displaceable in the vertical direction, and therefore the vehicle seat (2) is displaceable horizontally along the seat carrier console (3) and, in the displaced position, is fixable to the seat carrier console (3).

7. Seat device according to one of Claims 1 to 6, **characterized in that** a connecting part (11) which extends in the axial direction of the console carrier (4) and comprises a latching rail having vertically spaced-apart latching grooves (12) is located in the interior of the console carrier (4).

## Revendications

1. Dispositif de siège (1), en particulier pour un véhicule militaire, comprenant un siège de véhicule (2) qui est fixé sur une console de support de siège (3), un élément consommant de l'énergie (8) étant incorporé dans le support de console (4) retenant la console de support de siège (3) de telle sorte que, dans le cas d'une surcharge occasionnée au passage sur une mine ou une attaque d'explosifs, l'élément consommant de l'énergie (8) soit déplacé d'une position de repos dans une autre position, de sorte que la hauteur de siège par rapport au toit du véhicule ou au plafond du véhicule (5) varie, la distance au toit ou au plafond du véhicule étant allongée, **caractérisé en ce que** l'élément consommant de l'énergie (8) se compose d'au moins deux premières parties profilées (14, 15) pouvant être enfoncées l'une dans l'autre de manière télescopique, et la partie profilée intérieure (14) présente divers bombements, qui viennent en contact avec la paroi intérieure de la partie profilée extérieure (15), de sorte qu'il soit possible d'ajuster une force nette limitable par déplacement de la partie profilée intérieure (14) à travers la partie profilée extérieure (15).

2. Dispositif de siège selon la revendication 1, **caractérisé en ce que** le support de console (4) peut être fixé sur le plafond de véhicule (5) du véhicule correspondant.

3. Dispositif de siège selon la revendication 1, **caractérisé en ce que** le support de console (4) peut être fixé sur l'auge de véhicule du véhicule correspondant.

4. Dispositif de siège selon la revendication 2 ou 3, **caractérisé en ce que** le support de console (4) présente au moins deux deuxièmes parties profilées (6, 7) pouvant être enfoncées de manière télescopique l'une dans l'autre, la première partie profilée (6) étant connectée à la console de support de siège (3) et, en cas de force agissant brutalement sur la console de support de siège (3), peut être au moins en partie enfoncée à l'encontre de la force de rappel de l'élément consommant de l'énergie (8) depuis une position de repos dans une position enfoncée dans la deuxième partie profilée (7) pouvant être connectée au plafond du véhicule (5).

5. Dispositif de siège selon la revendication 4, **caractérisé en ce que** la première et la deuxième partie profilée (6, 7) sont des parties profilées de forme tubulaire.

6. Dispositif de siège selon l'une quelconque des revendications 1 à 5, **caractérisé en ce que** le siège de véhicule (2) est disposé horizontalement et peut être déplacé dans la direction verticale, de sorte que le siège de véhicule (2) puisse être déplacé horizontalement le long de la console de support de siège (3) et puisse être fixé dans la position déplacée sur la console de support de siège (3).

7. Dispositif de siège selon l'une quelconque des revendications 1 à 6, **caractérisé en ce qu'**à l'intérieur du support de console (4) se trouve une partie de connexion (11) s'étendant dans la direction axiale du support de console (4), laquelle comprend un rail d'encliquetage espacé verticalement et présentant des rainures d'encliquetage (12).
